# EUROPÄISCHE PATENTSCHRIFT

(11) **EP 0 616 301 B1**
(45) Veröffentlichungstag und Bekanntmachung des Hinweises auf die Patenterteilung: **08.07.1998**
(21) Anmeldenummer: 94101537.2
(22) Anmeldetag: 02.02.1994
(51) Int. Cl.: G07B 15/00, G08G 1/0969

(54) **Vorrichtung zur Bestimmung von Wegebenutzungsgebühren**
Device for determining road use charge
Dispositif de détermination de péage routier

(30) Priorität: 17.02.1993 DE 4304838
(43) Veröffentlichungstag der Anmeldung: 21.09.1994
(73) Patentinhaber: DAIMLER-BENZ AKTIENGESELLSCHAFT, 70567 Stuttgart (DE)
(72) Erfinder: Schüssler, Robert, Dipl.-Ing., D-70597 Stuttgart (DE)

(56) Entgegenhaltungen:
- WO-A-92/08210
- WO-A-92/10824
- DE-A- 3 805 810
- DE-A- 4 005 803
- DE-A- 4 112 472
- US-A- 4 675 676
- VEHICLE NAVIGATION & INFORMATION SYSTEMS CONFERENCE PROCEEDINGS, PART 2, 1.Oktober 1991 WARRENDALE,PA, Seiten 957-967, XP 000357200 SABOUNGHI 'Intelligent vehicle highway system - the universal close-range / vehicle communication system concept - the enhanced AVI and its CVO applications'

## Beschreibung

Die Erfindung bezieht sich auf eine Vorrichtung zur Bestimmung der Benutzungsgebühr für das Befahren einer Wegstrecke durch ein Fahrzeug.

Systeme zur Erhebung einer derartigen Benutzungsgebühr gewinnen in jüngster Zeit an Bedeutung, insbesondere für das Befahren von Straßen durch Automobile. In manchen Ländern wird ein Vignettensystem, z.B. für Autobahnen, praktiziert, welches unabhängig vom Nutzungsgrad die Einrichtung eines festen jährlichen Betrages vorsieht. Bei dem insbesondere für aufwendige Autostraßenabschnitte, z.B. Paßstraßen oder Tunnels, gebräuchlichen Mautsystem fällt hingegen eine Gebühr nur bei der jeweiligen tatsächlichen Benutzung an.

Bekannte Mautsysteme, bei denen die Straßenbenutzungsgebühr nutzungsabhängig nur für das Befahren des gebührenpflichtigen Streckenabschnitts erhoben wird, erfordern straßenseitige Einrichtungen als Systemteile. So beinhaltet ein in der DE 38 30 643 A1 offenbartes Mautsystem eine straßenseitige Feststation mit Rechnereinheit sowie geeignete Schrankenanordnungen an den Mautgrenzen.

Straßenseitige Detektoreinrichtungen innerhalb einer Mautstrecke bestimmter Länge sind auch bei dem aus der DE 41 12 472 A1 bekannten Mautsystem vorgesehen. Neben solchen für die Ortserfassung an den Mautgrenzen dienen mehrere weitere Detektoren dort der Erfassung der jeweiligen Fahrzeuggeschwindigkeit, wobei signifikante Abweichungen von einem Geschwindigkeitsrichtwert zu einer Erhöhung der Mautgebühr führen.

Ein weiteres Mautsystem, bei dem eine fahrzeugseitige Station und eine straßenseitig installierte Feststation kodierte Informationen zur Mauterfassung austauschen, ist in der DE 40 39 887 A1 erwähnt. Hierbei ist ein erster straßenseitiger Sender, der z.B. an einer Bake montiert ist, vorgesehen, der nach detektiertem Eintritt des Fahrzeugs in die Mautzone Signale an die Fahrzeugstation übermittelt, die den Mautbetrag festlegen. Ein zweiter straßenseitiger Sender, der z.B. an einer weiteren Bake montiert ist, empfängt eine Quittungsmeldung von der Fahrzeugstation und prüft die Gebührenentrichtung.

Wegen der Notwendigkeit von Schrankeneinrichtungen an den Mautgrenzen eignen sich die bekannten Mautsysteme vor allem zur Erhebung einer Straßenbenutzungsgebühr für hinreichend abgeschlossene Streckenabschnitte, bei denen ein Umfahren der Detektor- oder Zahlstationen an den Mautgrenzen nicht möglich ist. Bei sehr starker Streckenverzweigung wird dies entsprechend aufwendig, da eine entsprechend große Anzahl an straßenseitigen Einrichtungen erforderlich ist.

Zur Bestimmung einer streckenlängenabhängigen Fahrzeugbenutzungsgebühr sind Taxameter bekannt, wie sie beispielsweise in Taxis zum Einsatz kommen. Solche Taxameter, die den Fahrpreis primär in Abhängigkeit der zurückgelegten Weglänge und eventueller Wartezeiten bestimmen, sind z.B. in der DE 40 23 110 A1 und der DE 25 12 954 C3 beschrieben. Zur Bestimmung einer Straßenbenutzungsgebühr sind Taxameter als solche nicht geeignet, da sie nicht die diese Gebühr primär beeinflussenden Größen, wie z.B. die Art der benutzten Straße, erfassen.

Aus der EP 0 387 474 A2 ist es bekannt, die von einem Taxameter bestimmte Gebühr von einer benutzereigenen Kreditkarte abbuchen zu lassen.

Zum Stand der Technik gehören des weiteren fahrzeugseitige Einrichtungen zur Positionsbestimmung des Fahrzeugs mit Hilfe von Satellitensignalen, siehe z.B. die DE 41 30 367 A1. Um die Position des Fahrzeugs innerhalb einer optisch anzeigbaren Straßenkarte im Fahrzeug wiedergeben zu können, ist es aus der DE 40 33 527 A1 bekannt, einen solchen Fahrzeugpositionsdetektor mit einer elektronisch gespeicherten Straßenkarte zu kombinieren, wodurch eine Auswerteeinheit mittels Vergleich der jeweiligen Daten die Fahrzeugposition auf der Straßenkarte bestimmt.

Eine Vorrichtung nach dem Oberbegriff von Anspruch 1 ist beispielsweise aus der WO-A-92/10824 bekannt.

Der Erfindung liegt als technisches Problem die Schaffung einer Vorrichtung zur Bestimmung der angefallenen Benutzungsgebühr für das Befahren einer Wegstrecke durch ein Fahrzeug zugrunde, mit der es möglich ist, die Gebühr ohne ortsfeste straßenseitige Einrichtungen fahrzeugautonom und für beliebige befahrene Streckenabschnitte eines Wegenetzes zu bestimmen.

Dieses Problem wird durch eine Vorrichtung zur Bestimmung der Wegebenutzungsgebühr mit den Merkmalen des Patentanspruchs 1 gelöst. Jedem gebührenpflichtigen Streckenabschnitt eines gesamten, in einer fahrzeugseitigen, elektronischen Speichereinrichtung abgespeicherten Wegenetzes ist ein Strecken-Gebührenparameter zugeordnet, der den für diesen Abschnitt fälligen Benutzungsgebührenanteil repräsentiert. Der Erfindungsgegenstand erlaubt die Bestimmung der Benutzungsgebühr sowohl für den Fall einer generellen Gebührenerhebung für das gesamte, einem Fahrzeug zugängliche Wegenetz, das dann als ganzes zusammen mit den zugehörigen Strecken-Gebührenparametern abgespeichert ist, als auch in Fällen nur teilweiser Gebührenerhebung, z.B. nur für Autobahnen, aufwendige Streckenabschnitte oder innerhalb bestimmter Landes- oder Stadtgrenzen liegende Wege. In letzteren Fällen ist es entweder möglich, nur die gebührenpflichtigen Wege im Wegenetz zusammen mit den zugehörigen Strecken-Gebührenparametern abzuspeichern oder aber ein grösseres, z.B. das gesamte zugängliche Wegenetz abzuspeichern und die nicht gebührenpflichtigen Streckenabschnitte mit dem Strecken-Gebührenparameterwert für die Gebühr "Null" zu belegen.

Entsprechend der Dichte des abgespeicherten Wegenetzes besitzen die Mittel zur Positionsbestimmung des Fahrzeugs eine ausreichende örtliche Auflösung, welche eine eindeutige Zuordnung der befahrenen Wegstrecke zu den einzelnen, möglicherweise unmittelbar benachbarten Streckenabschnitten des abgespeicherten Wegenetzes erlaubt. Je nach geforderter Genauigkeit ist hierfür der Einsatz eines satellitenunterstützten Positionsbestimmungssystems und/oder weiterer fahrzeugseitiger Einrichtungen, wie z.B. Raddrehzahlmesser, Richtungssensoren oder digitale Karten, vorgesehen.

In einer Ausgestaltung der Erfindung sind die abgespeicherten Daten des Wegnetzes und/oder der Strecken-Gebührenparameter aktualisierbar, indem die neuen Daten von einer Empfängereinheit, z.B. einem Radio- oder Mobilfunkempfänger, empfangen und über eine Eingabeeinheit in dem Speicher der Speichereinrichtung neu abgespeichert werden. Dies erlaubt eine flexible Anpassung des Systems an sich ändernde Gebühren für die jeweiligen Streckenabschnitte.

In einer weiteren Ausgestaltung der Erfindung ist eine Speichereinrichtung angeordnet, in welcher Umfeld-Gebührenparameter abgespeichert sind, die die Benutzungsgebühr zusätzlich zu den Strecken-Gebührenparametern in Abhängigkeit von der umgebenden Fahrzeugsituation, wie z.B. der Verkehrsdichte oder der Emissionsbelastung, beeinflußen, Vorzugsweise sind die Daten für die zeitabhängigen Umfeld-Gebührenparameter überschreibbar, wozu dem Speicher wiederum eine Empfängereinheit und eine Eingabeeinheit vorgeschaltet sind.

In einer weiteren Ausgestaltung der Erfindung ist eine Speichereinrichtung vorgesehen, in welcher die Benutzungsgebühr ebenfalls beeinflussende, fahrzeug- und/oder fahrtspezifische Gebührenparameter abgespeichert sind, wie z.B. die Beladung, die Fahrgeschwindigkeit oder die Achslast. Zur Erfassung und gegebenenfalls Aktualisierung dieser Fahrzeug-Gebührenparameter sind dem Speicher vorzugsweise geeignete Sensoren sowie eine Eingabeeinheit zum Einschreiben von durch die Sensoren gewonnenen oder anderweitig eingegebenen Daten in den Speicher vorgeschaltet.

Vorteilhaft ist es, wenn die Rechnereinheit aus den von den Speichern extrahierten Daten und den Signalen der Positionsbestimmungsmittel eine momentane Straßenbenutzungsgebühr für den gerade befahrenen Streckenabschnitt bestimmt und auf einer optischen Anzeigeeinrichtung wiedergibt.

In Weiterbildung der Erfindung summiert die Rechnereinheit die von einem Ausgangspunkt an bislang angefallenen Gebührenanteile zu einer Gesamtgebühr auf und gibt sie auf einer optischen Anzeigeeinheit aus und/oder führt diesen Wert für die Gesamtgebühr einer Abbuchungseinheit zu, in die eine Benutzerkarte einsteckbar ist, von der die Gebühr selbsttätig abgebucht wird.

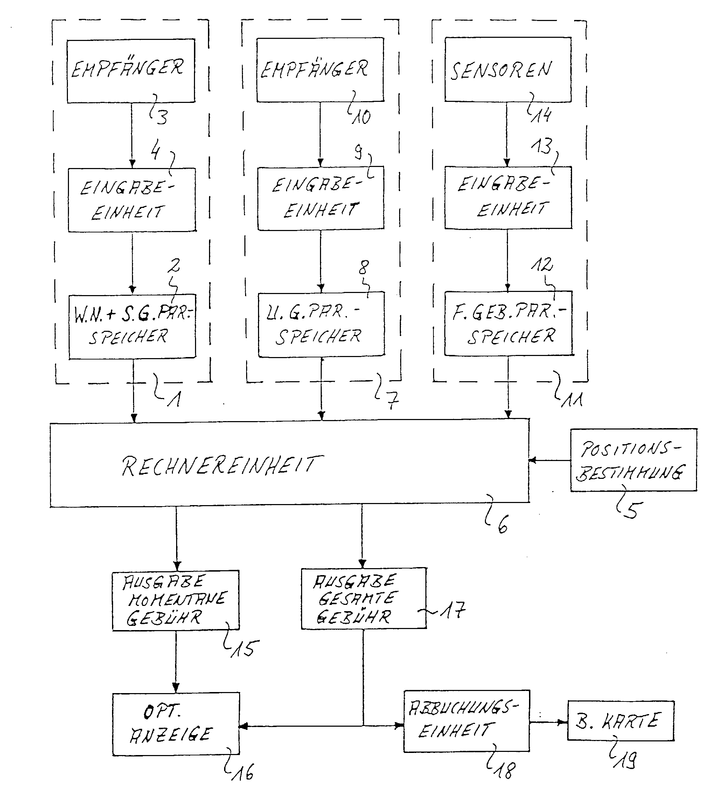

Eine bevorzugte Ausführungsform der Erfindung ist in der Figur dargestellt und wird nachfolgend beschrieben.

Die Figur zeigt eine Vorrichtung zur Bestimmung der Benutzungsgebühr für das Befahren einer bestimmten Wegstrecke durch ein Fahrzeug als Blockschaltbild. Die gesamte Vorrichtung mit ihren elektrisch verschalteten Komponenten befindet sich innerhalb des nicht dargestellten Fahrzeugs. Sie besitzt eine Rechnereinheit (6) sowie eine damit verbundene Einheit (5) zur Positionsbestimmung des Fahrzeugs, wofür ein satellitenunterstütztes System und/oder andere fahrzeugseitige Positionsbestimmungssysteme, wie z.B. Raddrehzahlmesser, Richtungssenoren oder digitale Karten, einsetzbar sind.

Des weiteren sind mit der Rechnereinheit (6) eine Wege-Speichereinrichtung (1), eine Umfeld-Gebührenparameterspeichereinrichtung (7) sowie eine Fahrzeug-Gebührenparameterspeichereinrichtung (11) verbunden.

Die Wege-Speichereinrichtung (1) beinhaltet einen löschbaren Speicher (2), in dem Daten eines Wegenetzes sowie zu jeweiligen Streckenabschnitten dieses Netzes gehörigen Gebührenparametern, welche den für diesen Abschnitt vorgesehenen Gebührenanteil repräsentieren, abgespeichert sind. Dem Speicher (2) ist eine Empfängereinheit (3) mit anschließender Eingabeeinheit (4) vorgeschaltet. Änderungen in der Gebührenhöhe für die jeweiligen Streckenabschnitte können auf diese Weise problemlos berücksichtigt werden, indem die die Änderungen repräsentierenden Daten, z.B. von einer zentralen Stelle aus, an die Empfängereinheit (3) gesendet werden, welche sie an die Eingabeeinheit (4) weiterleitet, die wiederum die Daten neu in den Speicher (2) einschreibt und veraltete Daten gegebenenfalls löscht. In gleicher Weise wird erforderlichenfalls das im Speicher (2) abgespeicherte Wegenetz geändert. Als Empfängereinheit (3) ist z.B. ein Radio oder Mobilfunkempfänger einsetzbar.

Die Umfeld-Gebührenparameterspeichereinrichtung (7) beinhaltet einen löschbaren Speicher (8), in welchem Daten von für das momentane Fahrumfeld charakteristischen, die Gebührenhöhe ebenfalls beeinflussenden Parametern, wie z.B. die momentane Verkehrsdichte und/oder die vorhandene Emissionsbelastung, abgespeichert sind. Analog zu der Wege-Speichereinrichtung (1) weist die Umfeld-Gebührenparameterspeichereinrichtung (7) ihrem Speicher (8) vorgeschaltet eine Empfängereinheit (10) und eine davon beaufschlagte Eingabeeinheit (9) auf, um gegebenenfalls neue Umfeld-Gebührenparameterdaten über die Empfängereinheit (10) zu empfangen und mittels der Eingabeinheit (9) in den mit dieser verbundenen Speicher (8) unter Überschreiben der bisherigen Daten abzuspeichern.

Die Fahrzeug Fahrzeug-Gebührenparameterspeichereinrichtung (11) beinhaltet einen löschbaren Speicher (12), in dem Daten von die Gebührenhöhe ebenfalls beeinflussenden, fahrzeug- und/oder fahrtspezifischen Parametern, z.B. der Fahrzeugtyp, die Beladung, die Fahrtgeschwindigkeit oder die Achslast abgespeichert sind. Dem Speicher (12) sind Sensoren (14) und eine von diesen beaufschlagte Eingabeeinheit (13) vorgeschaltet. Damit ist es wiederum möglich, die im Speicher (12) abgespeicherten Daten durch neue, aktuelle Daten zu überschreiben. Soweit es sich bei den Fahrzeug-Gebührenparametern um physikalische Meßgrößen handelt (z.B. Beladung und Fahrtgeschwindigkeit), werden diese von den Sensoren (14) erfaßt und die zugehörigen Signale an die Eingabeeinheit (13) gegeben. Daten anderer fahrzeugspezifischer Größen, z.B. der Fahrzeugtyp, sind gegebenenfalls direkt, z.B. mittels einer Tastatur, der Eingabeeinheit (13) zuführbar.

Die Inhalte der Speicher (2, 8, 12) sind von der Rechnereinheit (6) auslesbar. Mit diesen Daten sowie denjenigen der Positionsbestimmungseinheit (5) ermittelt die Rechnereinheit (6) nach einem hierfür eingerichteten Programm die jeweils momentan fällige Wegebenutzungsgebühr. Über eine, vorzugsweise integrierte, Ausgabeeinheit (15) wird dieser Wert auf einer angeschlossenen optischen Anzeigeneinheit (16) wiedergegeben, die z.B. eine Leuchtziffernanzeige, ein Papierstreifen oder dergleichen sein kann.

Gleichzeitig ermittelt die Rechnereinheit (6) die seit einem bestimmten Ausgangspunkt durch Summation der momentanen Gebührenwerte insgesamt angefallene gesamte Wegebenutzungsgebühr und gibt diesen Wert über eine, vorzugsweise integrierte, Ausgabeeinheit (17) aus. Die Ausgabeeinheit (17) leitet diesen Gebührenwert sowohl der mit ihr verbundenen optischen Anzeigeeinheit (16) zur entsprechenden optischen Wiedergabe als auch einer angeschlossenen Abbuchungseinheit (18) zu. In diese Abbuchungseinheit (18) ist eine Benutzerkarte (19) einführbar, wodurch die fällig gewordene Gebühr selbsttätig abgebucht wird. Bei der Benutzerkarte (19) kann es sich um eine elektronische Wertkarte, ähnlich einer Telefonkarte, handeln, die der Benutzer im voraus für einen bestimmten Betrag erwirbt und von der die Abbuchungseinheit (18) die jeweilige Gebühr abzieht. Alternativ ist es möglich, eine nachschüssige Zahlungsweise dergestalt vorzusehen, daß als Benutzerkarte (19) eine Kreditkarte verwendet wird, wobei die Abbuchungseinheit (18) das darauf gespeicherte Benutzerkonto liest und dieses belastet.

Die beschriebene Vorrichtung zur Bestimmung der anfallenden Wegebenutzungsgebühr erfordert keinerlei straßenseitige Einrichtungen, sondern arbeitet als elektronische datenverarbeitende Anlage vollständig fahrzeugautonom. Sie erlaubt außerdem eine sehr flexible Anpassung an sich ändernde Wegenetze und/ oder Gebühren und ermöglicht in einfacher Weise die Berücksichtigung einer Vielzahl unterschiedlicher, gebührenbeeinflussender Größen. Sie ist in Land-, Luft- und Seefahrzeugen verwendbar.

Selbstverständlich sind für den Fachmann naheliegende Modifikationen der dargestellten und beschriebenen Ausführungsform möglich. So ist es beispielsweise günstig, zusätzlich Einrichtungen oder Maßnahmen zum Schutz vor Mißbrauch oder Manipulation sowie für die Behandlung von Ausnahmesituationen vorzusehen, wenn beispielsweise die Positionsbestimmung nicht gelingt oder fehlerhaft ist oder wenn eine eingeführte Wertkarte keinen ausreichenden Wertbetrag mehr enthält. Die im Blockschaltbild einzeln dargestellten elektronischen Einheiten können wenigstens teilweise in einem gemeinsamen Baustein realisiert sein. So ist es möglich, die Speicher (2, 8, 12) zu einem einzigen Speicher zusammenzufassen, der bei Bedarf auch in der Rechnereinheit (6) integriert sein kann. Die Rechnereinheit (6) kann außerdem, ohne daß dies in der Figur explizit gezeigt ist, als Steuereinheit zur Steuerung der gezeigten sowie eventueller weiterer elektronischer Bausteine des Fahrzeugs dienen.

## Patentansprüche

1. Vorrichtung zur Bestimmung der Benutzungsgebühr für das Befahren einer Wegstrecke durch ein Fahrzeug, mit
- einer fahrzeugseitig angeordneten Wege-Speichereinrichtung (1), in welcher Daten wenigstens eines Wegenetzes elektronisch gespeichert sind, und
- fahrzeugseitig angeordneten Mitteln (5) zur Positionsbestimmung des Fahrzeugs,
**dadurch gekennzeichnet, daß**
- in der Wege-Speichereinrichtung (1) Daten wenigstens eines gesamten benutzungsgebührenpflichtigen Wegenetzes mit zugehörigen Strecken-Gebührenparametern, die jeweils einem bestimmten Streckenabschnitt des Wegenetzes zugeordnet sind und einen für die Benutzung dieses Abschnitts fälligen Wegebenutzungsgebührenanteil repräsentieren, gespeichert sind, und
- eine fahrzeugseitig angeordnete Rechnereinheit (6) vorgesehen ist, die mit der Wege-Speichereinrichtung (1) und den Positionsbestimmungsmitteln (5) verbunden ist und wenigstens aus den Daten der Positionsbestimmungsmittel und der Wege-Speichereinrichtung die für das Benutzen der vom Fahrzeug befahrenen Wegstreckenabschnitte fällige Benutzungsgebühr ermittelt.

2. Vorrichtung nach Anspruch 1,
**dadurch gekennzeichnet,**
daß die Wege-Speichereinrichtung einen löschbaren Speicher (2), eine Empfängereinheit (3) zum Empfang aktualisierter Daten des Wegenetzes und/oder der Strecken-Gebührenparameter sowie eine Eingabeeinheit (4) zum Einschreiben der empfangenen, aktualisierten Daten in den Speicher (2) beinhaltet.

3. Vorrichtung nach Anspruch 1 oder 2,
**gekennzeichnet durch**
eine mit der Rechnereinheit (6) verbundene Speichereinrichtung (7) zur elektronischen Speicherung der Daten von Umfeld-Gebührenparametern, die einen von der momentanen Fahrzeugumfeldsituation abhängigen und von der Rechnereinheit bei der Gebührenermittlung berücksichtigten Benutzungsgebührenanteil repräsentieren.

4. Vorrichtung nach Anspruch 3,
**dadurch gekennzeichnet,**
daß die Umfeld-Gebührenparameter-Speichereinrichtung (7) einen löschbaren Speicher (8), eine Empfängereinheit (9) zum Empfang aktualisierter Umfeld-Gebührenparameterdaten sowie eine Eingabeeinheit (9) zum Einschreiben der empfangenen, aktualisierten Daten in den Speicher (8) beinhaltet.

5. Vorrichtung nach einem der Ansprüche 1 bis 4,
**gekennzeichnet durch**
eine mit der Rechnereinheit (6) verbundene Speichereinrichtung (11) zur elektronischen Speicherung der Daten von Fahrzeug-Gebührenparametern, die einen fahrzeugbezogenen und von der Rechnereinheit bei der Gebührenermittlung berücksichtigten Benutzungsgebührenanteil repräsentieren.

6. Vorrichtung nach Anspruch 5,
**dadurch gekennzeichnet,**
daß die Fahrzeug-Gebührenparameter-Speichereinrichtung (11) einen löschbaren Speicher (12), Mittel zur Erfassung der Werte für die Fahrzeug-Gebührenparameter (14) sowie eine deren Ausgangsdaten in den Speicher (12) einschreibende Eingabeeinheit (13) beinhaltet.

7. Vorrichtung nach einem der Ansprüche 1 bis 6,
**dadurch gekennzeichnet,**
daß die Rechnereinheit (6) den Wert der jeweils momentan anfallenden Benutzungsgebühr bestimmt und über eine Ausgabeeinheit (15) an eine optische Anzeigeeinheit (16) ausgibt.

8. Vorrichtung nach einem der Ansprüche 1 bis 7,
**dadurch gekennzeichnet,**
daß die Rechnereinheit (6) den Wert der während einer Fahrt insgesamt aufgelaufenen Benutzungsgebühr bestimmt und über eine Ausgabeeinheit (17) ausgibt.

9. Vorrichtung nach Anspruch 8,
**dadurch gekennzeichnet,**
daß das Ausgangssignal der Ausgabeeinheit für die Gesamtgebühr (17) der optischen Anzeigeeinheit (16) zugeführt ist.

10. Vorrichtung nach Anspruch 8 oder 9,
**dadurch gekennzeichnet,**
daß das Ausgangssignal der Ausgabeeinheit für die Gesamtgebühr (17) einer Abbuchungseinheit (18) zugeführt ist, welcher eine Benutzerkarte (19) zur Abbuchung der Gebühr zuführbar ist.

## Claims

1. Device for determining the toll for a vehicle travelling over a route section, comprising
- a road storage device (1), arranged to be vehicleborne, in which data of at least one road network are electronically stored, and
- means (5), arranged to be vehicle-borne, for determining the position of the vehicle,
characterized in that
- in the road storage device (1), data of at least one entire toll-chargeable road network with associated road toll parameters, which are in each case allocated to a particular road section of the road network and represent a proportional road toll due for the use of this section, are stored, and
- a computer unit (6), arranged to be vehicle-borne, is provided which is connected to the road storage device (1) and the positioning means (5) and determines the toll due for the use of the route sections travelled by the vehicle at least from the data of the position determining means and the road storage device.

2. Device according to Claim 1, characterized in that the road storage device contains an erasable memory (2), a receiver unit (3) for receiving updated data of the road network and/or the road toll parameters and an input unit (4) for writing the received updated data into the memory (2).

3. Device according to Claim 1 or 2, characterized by a storage device (7), connected to the computer unit (6), for electronic storage of the data of environmental toll parameters which represent a proportional toll dependent on the current environmental situation of the vehicle and taken into consideration by the computer unit in the determination of the toll.

4. Device according to Claim 3, characterized in that the environmental toll parameter storage device (7) contains an erasable memory (8), a receiver unit (3) for receiving updated environmental toll parameter data and an input unit (9) for writing the received updated data into the memory (8).

5. Device according to one of Claims 1 to 4, characterized by a storage device (11), connected to the computer unit (6), for the electronic storage of data of vehicle-related toll parameters which represent a vehicle-related proportional toll which is taken into consideration by the computer unit during the determination of the toll.

6. Device according to Claim 5, characterized in that the vehicle toll parameter storage device (11) contains an erasable memory (12), means for registering the values of the vehicle toll parameters (14) and an input unit (13) writing the output data of the latter into the memory (12).

7. Device according to one of Claims 1 to 6, characterized in that the computer unit (6) determines the value of the in each case currently accrued toll and outputs it via an output unit (15) to a visual display unit (16).

8. Device according to one of Claims 1 to 7, characterized in that the computer unit (6) determines the value of the total toll accrued during a trip and outputs it via an output unit (17).

9. Device according to Claim 8, characterized in that the output signal of the output unit for the total toll (17) is supplied to the visual display unit (16).

10. Device according to Claim 8 or 9, characterized in that the output signal of the output unit for the total toll (17) is supplied to a debiting unit (18), which can be fed with a user card (19) for debiting the toll.

## Revendications

1. Dispositif pour déterminer le péage pour le déplacement d'un véhicule sur un parcours, comportant
- un dispositif (1) de mémorisation de routes, qui est installé dans le véhicule et dans lequel des données d'au moins un réseau routier sont mémorisées par voie électronique, et
- des moyens (5) installés dans le véhicule et servant à déterminer la position du véhicule,
caractérisé en ce que
- dans le dispositif (1) de mémorisation de routes sont mémorisées des données d'au moins un réseau routier complet à péage ainsi que des paramètres associés de péage routier, qui sont associés chacun à un tronçon de route déterminé dans le réseau routier et qui représentent un pourcentage du péage routier qui est dû pour l'utilisation de ce tronçon de route, et
- il est prévu une unité de calcul (6), qui est installée dans le véhicule, est reliée au dispositif (1) de mémorisation de routes et aux moyens (5) de détermination de position et détermine, au moins à partir des données des moyens de détermination de position et du dispositif de mémorisation de routes, le péage qui est dû pour l'utilisation des tronçons de routes empruntés par le véhicule.

2. Dispositif selon la revendication 1, caractérisé en ce que le dispositif de mémorisation de routes contient une mémoire effaçable (2), une unité de réception (3) servant à recevoir des données actualisées du réseau routier et/ou des paramètres de péage routier ainsi qu'une unité d'entrée (4) pour inscrire les données reçues actualisées dans la mémoire (2).

3. Dispositif selon la revendication 1 ou 2,
caractérisé par
un dispositif de mémoire (7) relié à l'unité de calcul (6) et servant à réaliser la mémorisation électronique des données de paramètres de taxes d'environnement, qui représentent un pourcentage du péage qui dépend de la situation instantanée de l'environnement du véhicule et pris en compte par l'unité de calcul pour la détermination du péage.

4. Dispositif selon la revendication 3, caractérisé en ce que le dispositif de mémoire de paramètres de taxes d'environnement (7) contient une mémoire effaçable (8), une mémoire de réception (9) servant à recevoir des données actualisées de paramètres de taxes d'environnement ainsi qu'une unité d'entrée (9) pour l'inscription des données reçues actualisées dans la mémoire (8).

5. Dispositif selon l'une des revendications 1 à 4, caractérisé par un dispositif de mémoire (11), qui est relié à l'unité de calcul (6) et sert à réaliser la mémorisation électronique des données de paramètres de péage du véhicule, qui représentent un pourcentage du péage rapporté au véhicule et prise en compte par l'unité de calcul lors de la détermination du péage.

6. Dispositif selon la revendication 5, caractérisé en ce que le dispositif de mémoire de paramètres de péage d'un véhicule (11) contient une mémoire effaçable (12), des moyens pour détecter les valeurs des paramètres (14) de péage du véhicule ainsi qu'une unité d'entrée (13) qui inscrit les données de sortie des paramètres dans la mémoire (12).

7. Dispositif selon l'une des revendications 1 à 6, caractérisé en ce que l'unité de calcul (6) détermine la valeur du péage, qui est dû instantanément, et la délivre par l'intermédiaire d'une unité de sortie (15) à une unité d'affichage optique (16).

8. Dispositif selon l'une des revendications 1 à 7, caractérisé en ce que l'unité de calcul (6) détermine la valeur du péage nouvellement dû pour un trajet et la délivre au moyen d'une unité de sortie (17).

9. Dispositif selon la revendication 8, caractérisé en ce que le signal de sortie de l'unité (17) de sortie du péage total est envoyé à l'unité d'affichage optique (16).

10. Dispositif selon la revendication 8 ou 9, caractérisé en ce que le signal de sortie de l'unité (17) de sortie du péage total est envoyé à une unité de paiement (18), à laquelle peut être envoyée une carte d'utilisateur (19) pour le paiement du péage.
